# EUROPEAN PATENT SPECIFICATION

(11) **EP 2 013 272 B1**
(45) Date of publication and mention of the grant of the patent: **04.03.2015**
(21) Application number: 07718766.4
(22) Date of filing: 20.04.2007
(51) Int. Cl.: C08K 3/36, C08K 3/18, C08K 3/22, C08K 3/38, C09K 21/14, H01B 3/10, H01B 3/44, H01B 7/295

(54) **FIRE RESISTANT COMPOSITIONS**
FLAMMWIDRIGE ZUSAMMENSETZUNGEN
COMPOSITIONS RÉSISTANT AU FEU

(30) Priority: 21.04.2006 AU 2006902094 P
(43) Date of publication of application: 14.01.2009
(73) Proprietor: Olex Australia Pty Limited, Tottenham, VIC 3012 (AU)
(72) Inventor: ALEXANDER, Graeme, Hampton East, Victoria 3188 (AU)
(74) Representative: Feray, Valérie
(86) International application number: PCT/AU2007/000519
(87) International publication number: WO 2007/121520

(56) References cited:
- WO-A1-2004/088676
- GB-A- 2 268 497
- US-A1- 2003 134 941
- US-A1- 2005 215 669
- US-A1- 2006 068 201
- DATABASE WPI Week 200574 Thomson Scientific, London, GB; AN 2005-725428 XP002624703, -& WO 2005/094967 A1 (NGK INSULATORS LTD) 13 October 2005 (2005-10-13) -& US 2007/166564 A1 (MORIMOTO KENJI [JP] ET AL) 19 July 2007 (2007-07-19)
- DATABASE WPI Week 200765 Thomson Scientific, London, GB; AN 2007-700948 XP002624717, -& WO 2007/074606 A1 (MURATA MFG CO LTD) 5 July 2007 (2007-07-05)
- DATABASE WPI Week 200045, Derwent Publications Ltd., London, GB; Class A26, AN 2000-501014, XP008118946 & JP 2000 169706 A (SHINETSU CHEM IND. CO. LTD.) 03 December 1998

## Description

### Field of the invention

The present invention relates to polymeric compositions which have useful fire resistant properties and which may be used in a variety of applications where retention of function in the event of a fire is necessary. The present invention is illustrated with particular reference to electric cables, where the retention of electric insulating properties is especially necessary, although it will be appreciated that the invention is more widely useful in the light of the associated benefits described herein.

### Background of the invention

Electric cables applications typically consist of a central conductor surrounded by at least an insulating layer. Such cables find widespread use in buildings and indeed form the basis for almost all electric circuits in domestic, office and industrial buildings. In some applications, eg. in emergency power and communication circuits, there is a requirement for cables that continue to operate and provide circuit integrity even when subjected to fire, and there is a wide range of standards for cables of this type. To meet some of these standards, cables are typically required to at least maintain electrical circuit integrity when heated to a specified temperature (eg. 650, 750, 950, 1050°C) in a prescribed manner and for a specified time (eg. 15 min, 30 min, 60 min, 2 hours). In some cases the cables are subjected to regular mechanical shocks during the heating stage. For example, they may be subjected to a water jet or spray either in the later stages of the heating cycle or after the heating stage. To meet a given standard a cable is typically required to maintain circuit integrity throughout the test. Thus it is important that the insulation maintains low conductivity (even after prolonged heating at high temperatures), maintains its shape so it does not shrink and crack, and is mechanically strong, particularly if it is required to remain in place during shock such as that resulting from mechanical impact due to water jet or spray exposure. It is also desirable that the insulation layer remaining after heating resists the ingress of water if the cable is required to continue operating during exposure to water spray for brief periods.

One method of improving the high temperature performance of an insulated cable has been to wrap the conductor of the cable with tape made with glass fibres and coated with mica. Such tapes are wrapped around the conductor during production and then at least one insulative layer is applied. Upon being exposed to increasing temperatures, the outer layer(s) are degraded and fall away, but the glass fibres hold the mica in place. These tapes have been found to be effective for maintaining circuit integrity in fires, but are quite expensive. Further, the process of wrapping the tape around the conductor is relatively slow compared with other cable production steps, and thus wrapping the tape slows overall production of the cable, again adding to the cost. A fire resistant coating that could be applied during the production of the cable by extrusion, thereby avoiding the use of tapes, is desirable.

Certain compositions that exhibit fire-resistance do not also display suitably high electrical resistivity at elevated temperature. When used in cable applications these compositions provide only thermal insulation and/or a physical barrier between the conductor and supporting metal trays or brackets and tend to be electrically conducting in a fire situation leading to circuit failure. In this case additional steps must be taken to ensure electrical insulation is maintained at elevated temperature. For instance, a composition which imparts thermal resistance and/or provides a physical barrier at elevated temperature but which becomes electrically conducting may be provided over a separate layer specifically incorporated in the design to provide electrical insulation. It would be desirable to provide a single composition which confers the required thermal insulation and/or provides the required coherent physical barrier (eg. no cracking or fracturing) at elevated temperature and which furthermore functions as an electrical insulator at those temperatures. This is likely to provide significant cost savings and simplify product manufacture.

Desirably, as well as providing thermal insulation and/or a coherent physical barrier or coating, compositions in accordance with the present invention may also exhibit the required electrical insulating properties at elevated temperatures.

Compositions in accordance with the present invention may also have excellent processability enabling them to be manufactured and used with ease by conventional techniques. In addition the invention allows the preparation of fire resistant polymer products with a wide range of mechanical properties so that the invention can be tailored to suit the requirements of many different applications.

### Summary of the invention

The distinguishing feature of this invention over other inventions that protect by converting from a polymeric to a ceramic state on heating is that the mineral that remains after burning out the polymeric components is selected as a part of the design of the composition, and the purpose of the inorganic components, their proportion, shape and state is all selected with a view to maximising the target mineral, while still maintaining useful properties in the polymeric state.

The applicant has found that by considering the composition of a target mineral, that it is possible to add "precursor" inorganics into the polymeric composition that favour the formation of the target mineral on firing of the polymeric composition. One example of this is the adding an oxidizable magnesium compound and a silica mineral to a fire resistant composition, in proportions and with selected particle sizes and size distributions such that the magnesium compound can react under fire rated temperatures with silica in the composition to form the mineral forsterite. Forsterite is a magnesium rich-material having the general formula Mg₂SiO₄. that is known to have high expansion and high electrical resistivity at high temperatures (1,000 °C). There are of course other minerals that can be formed in analogous ways, such as cordierite (2MgO.2Al₂O₃.5SiO₂), enstatite (MgSiO₃), and spinel (MgAl₂O₄).

According to one embodiment, there is provided a fire resistant polymeric composition which forms a target mineral on firing of the polymeric composition including
- 20 - 60 wt% of an organic polymer;
- 2 - 30 wt% of a magnesium compound that oxidises to form MgO; and
- 5 to 30 wt% silica.

The silica forms an acidic oxide that reacts with the alkaline MgO to form the target mineral.

In a preferred embodiment, the polymeric composition includes 30 - 45wt% of the organic polymer; 2 - 20% of the magnesium compound; and 5-20% silica. To ensure good polymeric properties, the total level of inorganic components in the polymeric composition should be no more than 65wt%.

The composition, depending on the target mineral or minerals, may further include up to 30 wt% alumina, Al₂O₃, of suitable particle size and distribution and other salts with volatile anions or otherwise able to form alumina when heated strongly, such as alumina trihydrate. Refractory clay may also represent a source of alumina, although the clay composition should exclude significant amounts of conductive cations and fluxing agents such as Li, Na and K, which will reduce the resistance of the composition at high temperatures. Preferably the polymeric composition contains no Li, Na and K.

In a preferred form of the invention, the magnesium compound of suitable particle size and distribution is magnesium hydroxide. Other magnesium compounds, such as salts with volatile anions, may be used depending upon the performance requirements of the composition. These may include magnesium carbonate, magnesium halides, nitrates or sulphates, although these compounds may be either too conductive or water absorbent for some applications.

In a preferred form of the invention, the above composition comprises less than 15 weight % of an alkaline earth metal borosilicate compound, the alkaline earth metal borosilicate compound forming a ceramic composition at an elevated temperature. The amount of alkaline earth metal borosilicate is preferably in the range of 5-15 wt% of the total composition.

A problem in producing borosilicate glass/ceramics is that boron volatilisation of the boron can result in a surface layers becoming enriched in silica. Further boric acid causes the lowering of viscosity of the ceramic composition as the temperature increases, thus leading to poor dimensional stability of the composition. Boric oxide and monovalent alkaline metals (eg. sodium and potassium) are also generally water soluble and thus the stability of these compositions is particularly prone to high temperatures and/or water.

The preferred form of the invention overcomes this problem by the addition of the borosilicate in an alkaline earth form. Preferably, the alkaline earth metal is selected from a group consisting of calcium, magnesium, strontium, barium, lead and zinc.

The composition of the invention is advantageously formulated to provide a self-supporting ceramic on exposure to an elevated temperature, such as those experienced under fire conditions (eg. temperatures of 1000°C for a period of 30 minutes).

Preferably, the alkaline earth metal borosilicate compound is calcium borosilicate. Advantageously, the calcium borosilicate compound includes calcium silicate and/or calcium borate or their precursors. While natural sources of calcium silicates (eg. wollastonite) and calcium borates (eg. hydroboracite (CaMgB₆O₁₁-6H₂O) or colemanite (CaB₃O₄(OH)₃-H₂O)) may be used, synthetic raw materials are preferred to minimise the release or volatile gases and/or an increase conductivity (due to monovalent impurities e.g. Na and/or K) under the exposure of the composition to elevated temperatures.

Preferably, the boron content of the ceramic composition is at least 1 weight %, preferably at least 3 weight % and even more preferably at least 5 weight %. The boron content may be up to 12.5 weight % or greater and produce a ceramic composition with advantageous functionality.

The borosilicate ceramics formed from the composition of the invention on exposure to an elevated temperature experienced under fire conditions preferably has a flexural strength of at least 0.3Mpa, more preferably at least 1 MPa and most preferably at least 2 MPa.

The resulting cable of the present invention is able to remain functional in a fire and when subjected to mechanical, thermal and chemical shock associated with the exposure of the cable to fire and the resulting aftermath.

The volatilisation of boron compounds on exposure of a composition to evaluated temperatures may result in the formation of cracks resulting from the escape of excess amounts of volatile gases including boron, in addition to steam and carbon dioxide. Whereas, boron compounds are prone to volatilisation at elevated temperatures, which negatively affects the performance of the resultant ceramifiable composition, the boron is securely bonded within the alkaline earth metal boron silicate compound, such that boron volatilisation does not present a problem. Further, whereas boric acid is soluble in water, the alkaline earth metal borosilicate compound is preferably sparsely soluble in water. The solubility of the alkaline earth metal borosilicate is preferably less than 1% and more preferably less than 0.5%.

The percentage loss on ignition (LOI) of the boron in the alkaline earth metal borosilicate during exposure to elevated temperatures is relatively low compared to the LOI of conventional boron compounds used in the formation of ceramifiable compositions, such as boric oxide or borax. Preferably, the LOI of the borosilicate is 10% or less, more preferably 6% or less and even more preferably 5% or less.

Other mineral filler material may also be added to composition. The mineral fillers are preferably substantially free of monovalent alkaline metals, to avoid an increase in the composition's conductivity under elevated temperatures.

The borosilicate ceramic is preferably low in alkali metals (eg. sodium, potassium and lithium) to produce a ceramic with good (high) resistivity at elevated temperatures. Preferably, the composition has no more than 1 weight % alkaline metals, more preferably no more than 0.5 weight % alkaline metals and even more preferably no more than 0.1 weight %.

The boron in the divalent metal borosilicate compound is chemical and/or physically bonded within the compound such that boron is not prone to volatilisation and/or dissolution on contact with water. The presence of a source of silicate in a proximal relationship with the boron favours the migration of boron into a glass/ceramic phase upon exposure to evaluated temperatures, such as those experienced under fire conditions. The alkaline earth metal borosilicate compound is at least partially crystalline and is produced by chemical and/or physical reaction. Preferably, the alkaline earth metal borosilicate compound is at least 20 wt% crystalline, more preferably at least 40wt% crystalline and most preferably at least 60wt% crystalline.

The alkaline metal borosilicate compound preferably includes wollastonite (CaO.SiO₂) which has been treated with calcium and boron compound(s), such as slaked lime and boric oxide. The alkaline earth metal borosilicate compound may be produced through combining the individual raw materials into an aqueous slurry, which is milled for an extended period of time (eg. 4 hours), drained, filtered and dried. The dried product is then pulverised in an impact mill. While not wanting to be bound by theory, it is thought that the prolonged mechanical working of raw materials produces an alkaline earth metal borosilicate in which the compounds are tightly bonded together by chemical and/or physical means. The scope and production of relevant borosilicate compounds is further described in US 3,846,148 which is incorporated hereinbefore by reference.

Examples of suitable calcium borosilicate compounds include, but are not limited to, Halox^{™} CW-22, 221 and 291 having a molar formula of 1.2CaO.0.2B₂O₃.SiO₂.0.5H₂O (IR spectrum: maximum absorbance at 3440, 1640, 1410 and 1190 - 900 cm⁻¹) and Halox^{™} CW-2230 having the formula 1.4CaO.0.5B₂O₃.SiO₂.0.5H₂O.

The alkaline metal borosilicate preferably has a FTIR spectra peak corresponding to a Si-O-B (645cm⁻¹ and 900 cm⁻¹), indicative or a borosilicate compound.

The melting point of the alkaline earth metal borosilicate compound is preferably greater than 1000°C, more preferably greater than 1200°C and most preferably greater than 1500°C.

The mean particle size of the alkaline earth metal borosilicate is preferably less than 20 microns, more preferably less than 10 microns and most preferably less than 6 microns.

The specific gravity of the alkaline earth metal borosilicate is preferably between 2 and 3.

Another preferred component in the invention coprises oxides of bismuth. These bismuth oxides are preferably present in amounts less than 5wt%. The applicant has found that the addition of bismuth oxides in amounts greater than 5 wt% retains considerable strength after firing but experiences levels of shrinkage of greater than 15 wt%. For situations where acceptable levels of shrinkage for example less than 15%, are required, it is preferable that the amount of bismuth oxides is less than 5 wt%, preferably less than 4 wt%.

The composition of the present invention includes as an essential component an organic polymer. An organic polymer is one which has an organic polymer as the main chain of the polymer. For example, silicone polymers are not considered to be organic polymers; however, they may be usefully blended with the organic polymer (s), as the minor component, and beneficially provide a source of silicon dioxide (which assists in formation of the ceramic) with a fine particle size when they are thermally decomposed. The organic polymer can be of any type, for example a thermoplastic polymer, a thermoplastic elastomer, a crosslinked elastomer or rubber, a thermoset polymer. The organic polymer may be present in the form of a precursor composition including reagents, prepolymers and/or which can be reacted together to form at least one organic polymer of the types mentioned above.

The organic polymer component can comprise a mixture or blend of two or more different organic polymers.

Preferably, the organic polymer can accommodate high levels of inorganic additives, such as the silicate mineral filler, whilst retaining good processing and mechanical properties. It is desirable in accordance with the present invention to include in the fire resistant compositions high levels of inorganic filler as such compositions tend to suffer reduced weight loss on exposure to fire when compared with compositions having lower filler content. Compositions loaded with relatively high concentrations of silicate mineral filler are therefore less likely to shrink and crack when ceramified by the action of heat. The presence in the compositions of the invention of the specified range of fluxing oxide is also believed to contribute in this respect.

It is also advantageous for the chosen organic polymer not to flow or melt prior to its decomposition when exposed to the elevated temperatures encountered in a fire situation. The most preferred polymers include ones that are cross-linked after the fire resistant composition has been formed, or ones that are thermoplastic but have high melting points and/or decompose to form a char near their melting points; however, polymers that do not have these properties may also be used.

Suitable organic polymers are commercially available or may be made by the application or adaptation of known techniques. Examples of suitable organic polymers that may be used are given below but it will be appreciated that the selection of a particular organic polymer will also be impacted by such things as the additional components to be included in the fire resistant composition, the way in which the composition is to be prepared and applied, and the intended use of the composition.

As indicated, organic polymers that are suitable for use with this invention include thermoplastic polymers, thermoset polymers, and (thermoplastic) elastomers.

Such polymers may comprise and copolymers of polyolefins, vinyl polymers, acrylic and methacrylic polymers, styrene polymers, polyamides, polyimides, epoxides, polyoxymethylene acetals, polycarbonates, polyurethanes, polyesters, phenolic resins and melamine-formaldehyde resins.

By way of illustration, examples of thermoplastic polymers suitable for use include polyolefins, polyacrylates, polycarbonates, polyamides (including nylons), polyesters, polystyrenes, polyurethanes and vinyl polymers. Suitable vinyl polymers include poly (vinyl chloride) (PVC) and poly (vinyl acetate) (PVAc).

Suitable polyolefins include homopolymers or copolymers of alkylenes. Specific examples of suitable polyalkylenes include polymers of the following olefins : ethylene, propylene, butene-1, isobutylene, hexene-1, 4-methylpentene, pentene- 1, octene-1, nonene-1 and decene-1. These polyolefins may be prepared using peroxide, complexing catalysts, Ziegler-Natta or catalysts, as is well known in the art. Copolymers of two or more of these olefins may also be employed, for example, ethylene-propylene copolymers and terpolymers (eg. EPDM), copolymers, copolymers and other copolymers of ethylene with one or more of the above-mentioned olefins. The olefins may also be copolymerised with other monomer species such as vinyl, acrylic or diene compounds. Specific examples of suitable ethylene-based copolymers include ethylene-vinyl acetate (EVA), ethylene-alkyl acrylate, preferably ethylene-ethyl acrylate (EEA) or ethylene-butyl acrylate (EBA), and ethylene-fluoroolefinic monomers, for example, ethylene-tetrafluoroethylene (ETFE).

There is wide range of organic polymers and copolymers that can be obtained commercially as water-based dispersions or emulsions that can be used in this invention, for example: acrylic, polyurethanes, vinyl esters polymers including poly (vinyl acetate),

Coatings and sealants based on organic polymers may be prepared by a number of means, including the use of solvents, emulsions or dispersions. For example, the composition of the present invention may be dissolved or dispersed in water or a suitable solvent, then applied. After application, the mixture may be dried and any solvent evaporated. Where the polymer is a thermoset polymer, the drying step may assist in curing of the reactive intermediates together with any curing additives to form the required coating or sealant.

Compositions of the invention may be formed about a conducting element or plurality of elements by extrusion (including co-extrusion with other components) or by application of one or more coatings.

As noted, the organic polymer chosen will in part depend upon the intended use of the composition. For instance, in certain applications a degree of flexibility is required of the composition (such as in electrical cable coatings) and the organic polymer will need to be chosen accordingly based on its properties when loaded with additives. Also in selecting the organic polymer account should be taken of any noxious or toxic gases which may be produced on decomposition of the polymer. The generation of such gases may be more tolerable in certain applications than others. Preferably, the organic polymer used is halogen-free.

The polymer base composition can also include at least one other polymer which is not an organic polymer.

Thus, compositions of the present invention may also include a silicone polymer in combination with the organic polymer as the polymer base composition in which the additional components are dispersed.

The organic polymer is preferably present in the polymer base composition in an amount of at least 50% by weight. This facilitates loading of the polymer base composition with the additional components without detriment to the processability of the overall composition. As noted the polymer base composition may include a silicone polymer. However, in this case the organic polymer would usually be present in the polymer base composition in a significant excess when compared with the silicone polymer. Thus, in the polymer base composition the weight ratio of organic polymer to silicone polymer may be from 5: 1 to 2: 1, for instance from 4: 1 to 3: 1. In terms of weight percentage, if present, the silicone polymer might generally be present in an amount of from 2 to 15% by weight based on the total weight of the formulated fire resistant composition. When a combination of organic and silicone polymers are used, high concentrations of silicone polymer can present processing problems and this should be taken into account when formulating compositions in accordance with the present invention.

The upper limit for the amount of polymer base composition in the fire resistant composition tends to be influenced by the desired properties of the formulated composition. If the amount of the polymer base composition exceeds about 60% by weight of the overall composition, it is unlikely that a cohesive, strong residue will be formed during a fire situation. Thus, the polymer base composition generally forms from 10 to 60%, preferably from 20 to 50%, by weight of the formulated fire resistant composition.

According to another aspect, the present invention provides an electrical cable comprising or consisting of a suitable composition in accordance with the present invention applied directly on a conductor. The cable may include other layers such as a cut- resistant layer and/or sheathing layer. However, the cable does not require an additional layer intended to maintain electrical insulation at elevated temperature. Suitable cut resistant materials and/or sheathing layers are well known in the art.

In another embodiment of the present invention, there is provided a method of preparing a fire resistance polymeric composition, the method including the steps of:
- determining a target mineral or minerals with the desired functional properties;
- selecting quantities of mineral precursors; and
- selecting a quantity of organic polymer;

The mineral precursors will react to form the target minerals at elevated temperatures.

Preferably the target mineral is forsterite.

### Brief description of the drawings

Figure 1 is a graph showing the resistance change of polymeric compositions of the present invention and conventional polymeric compositions between 700 to 1000°C;
Figure 2 is a graph showing the resistance change of the polymeric compositions of the present invention and conventional polymeric compositions between 800 to 1000°C;
Figure 3 is a XRD spectra of sample "new 3" before exposure to 1000°C, indicating the presence of Mg(OH)₂ in accordance to the present invention;
Figure 4 is a XRD spectra of sample "new 3" after exposure to 1000°C, indicating the presence of forsterite in accordance to the present invention;
Figure 5 is an image of samples 2-1 to 2-4 of the present invention prior to being exposed to an elevated temperature;
Figure 6 is a image of the samples in Figure 6 after exposure of the samples to 1000°C for 10 minutes;
Figure 7 is graph of shrinkage as a function of the calcium borosilicate content;
Figure 8 is graph of strength as a function of the calcium borosilicate content;
Figure 9 is graph of shrinkage as a function of the bismuth oxide content;
Figure 10 is graph of strength as a function of the bismuth oxide content;
Figure 11 is a graph of the resistance of plain and screened samples of formula 71105 (cable 1& 2) at elevated temperatures;
Figure 12 is a graph of the resistance of plain and screened samples of formula 71105 (cable 3 & 4) at elevated temperatures;
Figure 13 is a graph of the resistance of plain and screened samples of formula 71105 and 220506 (2 core plain and screened) at elevated temperatures;
Figure 14 is a graph of the resistance of plain and screened samples of formula 71105, 220506 and 30506 (2 core plain and screened) at elevated temperatures;
Figure 15 is a graph of the resistance of samples of formula 50706-1, 50706-2 and 50706-3 at elevated temperatures;
Figure 16 is a graph of the resistance of samples of formula 110706 (cable 9), 50706-1 and mica-taped wire as a comparison at elevated temperatures;
Figure 17 is a graph of the resistance of samples of formula 50706-1, 50706-2, 50706-3, 110706 and 130706-2 at elevated temperatures; and
Figure 18 is a graph of the resistance of samples of formula cable 1 to 9 and the mica-taped sample at elevated temperatures.

### Detailed description of the embodiments

The polymeric composition of the invention provides fire and water barrier properties on exposure to an elevated temperature experienced under fire conditions, while maintaining good mechanical properties. The polymeric composition includes precursor inorganic components that favour the formation of a target mineral on exposure of the polymeric composition to elevated temperatures, such that are experienced on the exposure of the composition to fire.

In particular, the polymeric composition includes a magnesium compound that oxidises to MgO; silica and optionally alumina or an alumina compound which oxidises to alumina, such as aluminium trihydrate (ATH). On exposure to elevated temperatures (eg. greater than 600°C), the magnesium begins to diffuse into the inorganic matrix. As the temperature of the composition increases the target mineral or minerals are formed from the inorganic precursor components in the polymeric composition.

A dispersed gas phase is formed as a result of the decomposition of the organic polymer. At high temperatures, the alkaline magnesium oxides reacts with the acidic silicon dioxide to form target minerals, such as forsterite, to solidify and strengthen the walls around the pores formed by the entrapment of gaseous phase.

It is preferably that the ratio of the magnesium compound to the silica is such that there is no excess MgO after the reaction with the silica or other target mineral precursor. When exposed to water, excess MgO forms an alkaline solution which may reduce the composition's functional performance. This is particularly important when the composition is used as part of a fire resistant cable and there is a requirement that the composition maintains circuit integrity when exposed to fire and water.

When the target mineral is forsterite, having a formula of 2MgO-SiO₂, the composition contains a magnesium compound which oxidises to MgO such that the molar ratio of available MgO to SiO₂ is preferably no more than about 2 to 1 (56.0wt % MgO to 44.0% SiO₂). More preferably, the amount of available SiO₂ is sufficient to enable the majority of MgO to react to form forsterite. However, a high excess if SiO₂ will lead to the forsterite converting to enstatite (MgSiO₃), which may or may not be a target mineral.

The composition, depending on the target mineral, may further include 0- 30 wt% alumina, Al₂O₃, of suitable particle size and distribution and other salts with volatile anions or otherwise able to form alumina when heated strongly, such as alumina trihydrate. More preferably, the polymeric composition contains 5 to 25wt% Al₂O₃. Refractory clay may also represent a source of alumina, although the clay composition should exclude conductive cations and fluxing agents such as Li, Na and K, which will reduce the high temperature resistance of the ceramic composition.

When the target mineral is cordierite, having a formula of 2MgO.2Al₂O₃.5SiO₂, the composition contains a magnesium compound which oxidises to MgO such that the molar ratio of available MgO to Al₂O₃ to SiO₂ is preferably no more than about 2 to 2 to 5 (13.8 wt % MgO to 34.8 wt% Al₂O₃ to 51.4 wt% SiO₂). More preferably, there is sufficient available SiO₂ and Al₂O₃ to enable the majority of MgO to react to form cordierite. Al₂O₃ and SiO₂ may be present in the form of clay, which has the advantageous feature of providing good moisture resistance to the polymeric composition in its unburnt state.

Other target minerals which provide good electrical insulating properties include alumina (Al₂O₃), enstatite (MgSiO₃), Steatite (Mg₃Si₄O₁₀(OH)₂) and spinel (MgAl₂O₄). The target precursor inorganic components are selected to favour the formation of the desired target minerals, while minimising the detrimental effects (eg. lower water resistance, resistivity or mechanical properties) of unreacted precursor material in the ceramic product.

It will be appreciated that the polymeric composition may be formulated such that more than one target mineral is produced in the ceramification of the polymeric composition. Kinetic and thermodynamic limitations will prevent the complete conversion of SiO₂, Al₂O₃ and MgO to the target mineral or minerals, by affecting the amount of available precursor which may react to form a target mineral at a given temperature and time. Further, processing limitations may also influence the specific proportion of silica and compounds which form Al₂O₃ and MgO. For instance, high silica levels results in the polymeric formulation having inferior processing and physical properties, while high alumina levels may lower the strength of the ceramic.

A distinguishing feature of the present invention is that the proportions of magnesium and aluminum compounds are selected to react with silica (or a source of silica) at high temperatures to form target minerals which have good mechanical, resistivity, fire and water resistant properties. Therefore, not only does the polymeric composition of the present invention contain components which retard the progression of the fire, but it also forms a ceramic residue composition with functional properties which enable the composition to effectively function both before and after exposure to fire and subsequent water exposure. Thus, the polymeric compositions of the present invention are commercially attractive as they offer significant cost savings in:
- the manufacture of a more simplified product having the required multi-functionality; and/or
- decreased product failure, e.g. electric cables.

It will also be appreciated that the mineral precursors may required pre-treatment to optimise surface area and/or particle size and distribution in order for the target minerals to favourable formed at elevated temperatures.

Other inorganic components such as TiO₂ may be added to aid the formation of the target minerals.

The ceramic composition, containing the target mineral, forms a hard and relatively strong ceramic of at least 0.3 MPa, preferably at least 1 MPa and more preferably at least 2 MPa in strength and of similar size and shape to the original article.

The ceramic composition provides good water resistance, which is particularly important when the polymeric composition of the present invention is used in the manufacture of electrical cables. Preferably, the polymeric composition contains sufficient reactants (eg. alumina and/or silica) to form target minerals without excessive excess of magnesium oxide. Magnesium oxide forms an alkaline solution on contact with water, which may affect the performance of the ceramic composition.

The shrinkage associated with the decomposition of the organic materials, and optionally also some of the inorganic components, is at least partially compensated by the formation of dispersed fine pores in the transient liquid phase. This results in good to excellent shape retention of the ceramic deposition product relative to the starting polymeric composition.

The ceramic composition has good resistivity when measured between 700 -1000°C and 800-1000°C and is thus suitable to use as a electrical insulator at elevated temperatures.

The composition provides a ceramic on exposure to an elevated temperature experienced under fire conditions which is preferably self-supporting. A range of different conditions can be encountered in a fire. Experimentally we have examined extreme conditions involving exposure up to 1000°C or 1050°C as required by fire rating standards.

### Organic polymers

The composition of the present invention includes an organic polymer. An organic polymer is one which has an organic polymer as the main chain of the polymer. For example, silicone polymers are not considered to be organic polymers; however, they may be usefully blended with the organic polymer (s), as the minor component, and beneficially provide a source of silicon dioxide (which assists in formation of the ceramic) with a fine particle size when they are thermally decomposed.

Preferably the organic polymer includes homopolymers and copolymers of polyolefins, although the organic polymer can be of any type, for example a thermoplastic polymer, a thermoplastic elastomer, a crosslinked elastomer or rubber, a thermoset polymer.

Suitable polyolefins include homopolymers or copolymers of alkylenes. Specific examples of suitable polyalkylenes include polymers of the following olefins : ethylene, propylene, butene-1, isobutylene, hexene-1, 4-methylpentene, pentene- 1, octene-1, nonene-1 and decene-1. These polyolefins may be prepared using peroxide, organometallic complexing catalysts, Ziegler-Natta or metallocene catalysts, as is well known in the art. Copolymers of two or more of these olefins may also be employed, for example, ethylene-propylene copolymers and terpolymers (eg. EPDM), ethylene-butene-1 copolymers, ethylene-hexene-1 copolymers, ethylene-octene-1 copolymers and other copolymers of ethylene with one or more of the above-mentioned olefins. The olefins may also be copolymerised with other monomer species such as, acrylic or diene compounds. Specific examples of suitable ethylene-based copolymers include ethylene-alkyl acrylate, preferably ethylene-ethyl acrylate (EEA) or ethylene-butyl acrylate (EBA), and ethylene-fluoroolefinic monomers, for example, ethylene-tetrafluoroethylene (ETFE).

The organic polymer may be present in the form of a precursor composition including reagents, prepolymers and/or oligonomers which can be reacted together to form at least one organic polymer of the types mentioned above.

The organic polymer component can comprise a mixture or blend of two or more different organic polymers.

Preferably, the organic polymer can accommodate high levels of inorganic components, whilst retaining good processing and mechanical properties. It is desirable in accordance with the present invention to include in the fire resistant polymeric compositions high levels of inorganic filler as such compositions tend to suffer reduced weight loss on exposure to fire when compared with compositions having lower inorganic content. Compositions loaded with relatively high concentrations of inorganic material are therefore less likely to shrink and crack when ceramified by the action of heat.

It is also advantageous for the chosen organic polymer not to flow or melt prior to its decomposition when exposed to the elevated temperatures encountered in a fire situation. The most preferred polymers include ones that are cross-linked after the fire resistant composition has been formed, or ones that are thermoplastic but have high melting points and/or decompose to form a char near their melting points; however, polymers that do not have these properties may also be used.

Suitable organic polymers are commercially available or may be made by the application or adaptation of known techniques. Examples of suitable organic polymers that may be used are given below but it will be appreciated that the selection of a particular organic polymer will also be impacted by such things as the additional components to be included in the fire resistant composition, the way in which the composition is to be prepared and applied, and the intended use of the composition.

As indicated, organic polymers that are suitable for use with this invention include thermoplastic polymers, thermoset polymers, and (thermoplastic) elastomers.

In addition to homopolymers and copolymers of polyolefins, the organic polymer may include acrylic and methacrylic polymers, styrene polymers, polyamides, polyimides, epoxides, polyoxymethylene acetals, polycarbonates, polyurethanes, polyesters, phenolic resins and melamine-formaldehyde resins.

By way of illustration, examples of thermoplastic polymers suitable for use include polyolefins, polyacrylates, polycarbonates, polyamides (including nylons), polyesters, polystyrenes and polyurethanes.

The thermoplastic polyolefin may also be a blend of two or more of the above-mentioned homopolymers or copolymers. For example, the blend can be a uniform mixture of one of the above systems with one or more of polypropylene, polybutene-1 and polar monomer-containing olefin copolymers. Preferably, the polar-monomer containing olefin copolymers comprises ethylene with one or more of acrylic monomers, such as ethylene-acrylic acid copolymers, ethylene- alkyl acrylate copolymers, preferably, ethylene-methyl acrylate, ethylene-ethyl acrylate or ethylene-butyl acrylate copolymers.

Suitable elastomers may comprise a variety of rubber compositions, such as natural rubber (NR), butyl rubber (IIR), styrene-butadiene rubber (SBR), nitrile- butadiene rubber (NBR), ethylene-propylene rubber (EPM), ethylene-propylene terpolymer rubber (EPDM), epichlorohydrin rubber (ECH) polychloroprene (CR), chlorosulfonated polyethylene (CSM) and chlorinate polyethylene (CM). Suitable thermoplastic elastomers may include styrene-isoprene-styrene (SIS), styrene- butadiene-styrene (SBS) and styrene-ethylene-butadiene-styrene (SEBS).

Suitable thermoset polymers may comprise phenolic resins, melamine- formaldehyde resins, urethane resins, acrylic resins, epoxy resins and polyester resins. Thermoset resins may be produced by any method as is well known in the art.

The organic polymers may be fabricated in the composition by any number of means, including but not limited to in situ polymerisation of monomers, prepolymers or reactive starting compounds and crosslinking or curing of suitable reactive intermediates. Specific examples of suitable monomers, prepolymers and reactive compounds include acrylates, urethanes, epoxides, phenol, formaldehyde, anhydrides and amines. Curing additives may also be added to assist in generation of the thermoset polymer.

The organic polymers that are particularly well suited for use in making coatings for cables are commercially available thermoplastic and crosslinked olefin based polymers, co-and terpolymers of any density. Co monomers of interest will be well known to those skilled in the art. Of particular interest are commercially available thermoplastic and crosslinked polyethylenes with densities from 890 to 960 kg/litre, copolymers of ethylenes of this class with acrylic and other olefin monomers, terpolymers of ethylene, propylene and diene monomers, so- called thermoplastic vulcanisates where one component is crosslinked while the continuous phase is thermoplastic and variants of this where all of the polymers are either thermoplastic or crosslinked by either peroxide, radiation or so-called silane processes.

Compositions of the invention may be formed about a conducting element or plurality of elements by extrusion (including co-extrusion with other components) or by application of one or more coatings.

As noted, the organic polymer chosen will in part depend upon the intended use of the composition. For instance, in certain applications a degree of flexibility is required of the composition (such as in electrical cable coatings) and the organic polymer will need to be chosen accordingly based on its properties when loaded with additives. Also in selecting the organic polymer account should be taken of any noxious or toxic gases which may be produced on decomposition of the polymer. Preferably, the organic polymer used is halogen-free.

### Preparation of polymeric composition

The polymeric composition can be prepared by any convention means. This includes adding the other components to: a monomer (or mixture of monomers) which is (are) then polymerised; prepolymers and/or oligomers which are then polymerised by chain extension and/or crosslinking reactions; thermoplastic polymers by melt blending; aqueous organic polymer dispersions by dispersive mixing (where the water present is not considered part of the composition in this invention); a solution of a polymer dissolved in a solvent (where the solvent present is not considered part of the composition in this invention); and thermosetting systems which are subsequently crosslinked.

Regardless how the composition is prepared it is necessary that added components (target mineral precursors, other inorganic components, and other organic additives) can be effectively mixed with the organic polymer (s), or the precursors used to form the polymer (s), so that they are well dispersed in the resulting composition and that the composition can be readily processed to produce the desired end product.

Any conventional compounding equipment may also be used. If the composition has relatively low viscosity, it may be processed using dispersing equipment, for instance of the type used in the paint industry. Materials useful for cable insulation applications are of higher viscosity (higher molecular weight) and may be processed using a two roll mill, internal mixers, twin-screw extruders and the like.

### Examples

The polymeric compositions of the examples were mixed with a brabender® mixer at 100°C for sufficient time to ensure uniform distribution of the components.

### Example 1

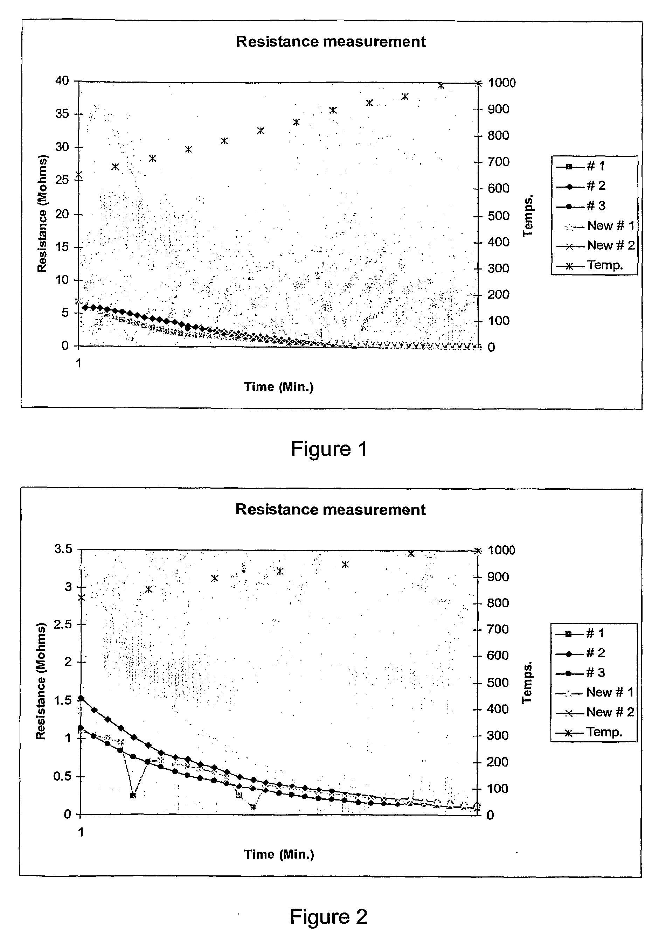

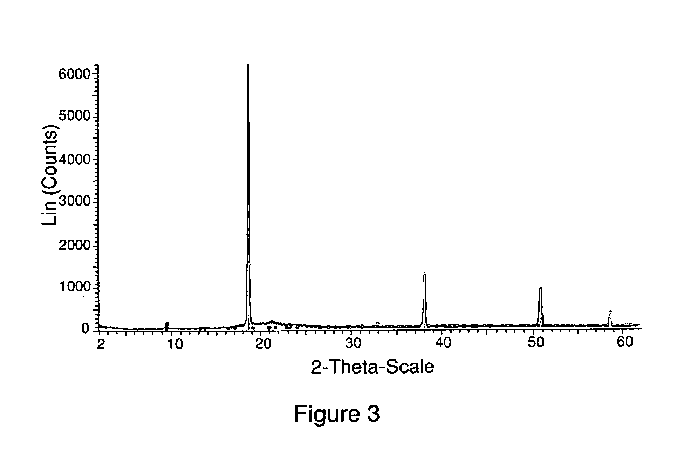

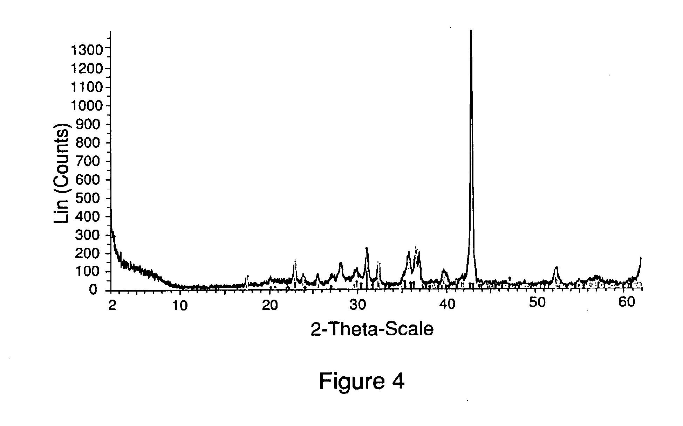

Three conventional polymeric compositions and three polymeric compositions (Table 1) of the present invention were measured for resistance (Mohms) between 700-1000°C and 800-1000°C. As illustrated in Figures 1 and 2, the polymeric composition of the present invention (samples new2 (190106-1), new3 (190106-2)) exhibited higher resistivity than conventional compositions (samples 1, 2, 3). XRD analysis of polymeric composition new3, before and after exposure to 1000°C revealed the conversion of magnesium hydroxide to forsterite, as illustrated in Figures 3 and 4.

After being heated to 1000°C for 10 minutes the ceramic products samples new1, new2, new3 were found to be hard, although new1 was, in comparison to new2 and new3, softer. The compositions also exhibited good to excellent resistance to water and shape retention.

**Table 1**

| Polymeric composition | 1 | 2 | 3 | New1 | New 2 | New 3 |
|---|---|---|---|---|---|---|
| Nordel IP4760 | 11.4 | 11.4 | 11.4 | - | - | - |
| Engage ENR7256 | - | - | - | 35 | 35 | 35 |
| Keltan2340A | 6.9 | 6.9 | 6.9 | - | - | - |
| Evatane 33-45 | 4.7 | 4.7 | 4.7 | 5 | 5 | 5 |
| Chinese APP | 13.4 | 18.4 | 13.4 | - | - | - |
| MV Talc | 24.8 | 29.7 | 19.8 | - | - | - |
| Translink 37 | 12.4 | 7.4 | 7.4 | - | - | - |
| Omyacarb 2T | 12.4 | 7.4 | 17.4 | - | - | - |
| ATH | 0.0 | 0.0 | 5.0 | 22 | 5 | - |
| Mg hydroxide | - | - | - | 20 | 34 | 40 |
| Nipsil VN3 Silica | - | - | - | 17 | 20 | 20 |
| P460 | 5.7 | 5.7 | 5.7 | - | - | - |
| Silane A172-50 | 1.0 | 1.0 | 1.0 | - | - | - |
| Wacker Silicone R401/80S | 2.5 | 2.5 | 2.5 | - | - | - |
| Vanox ZMTI | 1.0 | 1.0 | 1.0 | - | - | - |
| TMQ | 0.2 | 0.2 | 0.2 | - | - | - |
| Irganox MD1024 | 0.2 | 0.2 | 0.2 | - | - | - |
| Ti02 | - | - | - | 1 | 1 | - |
| Perkadox 14-40K | 2.6 | 2.6 | 2.6 | - | - | - |
| Zinc Stearate | 1.0 | 1.0 | 1.0 | - | - | - |

After 10 mins at 1,000°C

| Subjective hardness | Softer | Hard | Hard |
|---|---|---|---|
| Subjective water resistance | Good | Excellent | Excellent |
| Shape retention | Good | Excellent | Excellent |

**Table 2**

| A correlation between the trade names listed in Table 1 and 3 and their chemical name is given in Table 2. | |
|---|---|
| Trade name | Chemical name |
| Nordel IP4760 Vistalon | EPDM polymer |
| 2504/Keltan2340A | EPDM polymer |
| Evatane 33-45 | EVA polymer |
| Chinese APP | Ammonium polyphosphate |
| MV Talc | Talc |
| Translink 37 | Clay |
| Omyacarb 2T | Calcium carbonate Alumina |
| ATH | trihydrate |
| MgOH2 | Magnesium hydroxide |
| Nipsil VN3 Silica | Silica |
| P460 | Paraffinic oil |
| Silane A172-50 | Silane |
| Wacker Silicone | Silicone |
| R401/80S | elastomer |
| Vanox ZMTI | Stabiliser |
| TMQ | Antioxidant |
| Irganox MD1024 | metal deactivator |
| Perkadox 14-40K | peroxide |
| Zinc Stearate | zinc stearate |

### Example 2

This example examines the ability of magnesium hydroxide and silica to replace existing inorganic minerals, specifically talc and clay (translink 37), to form a polymeric composition that would have good fire and water resistance properties at high temperatures. All compositions produced polymeric compositions with good tensile and % elongation properties (Table 3).

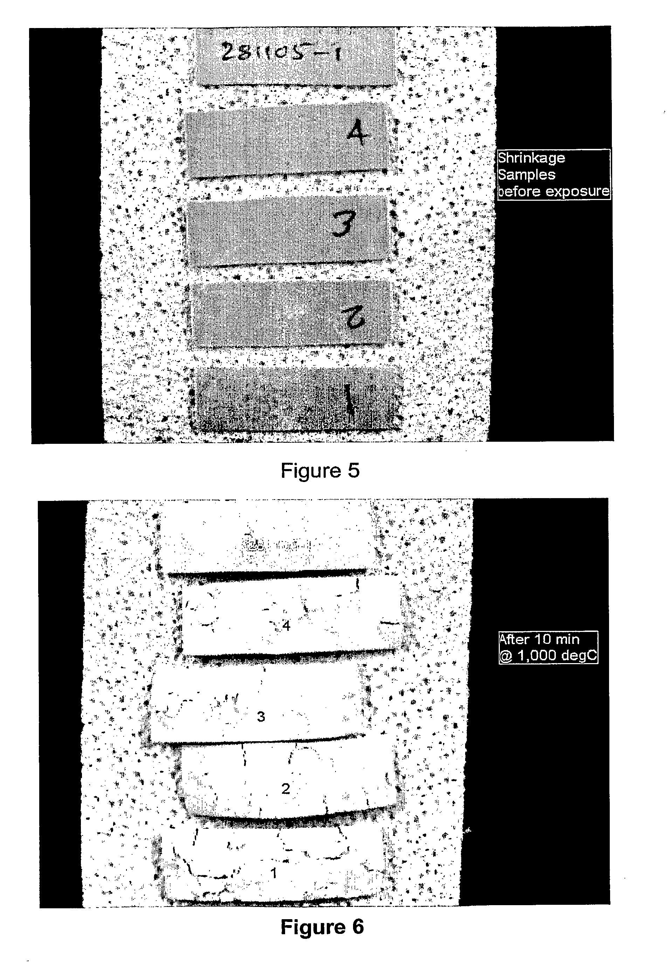

When heated to 1000°C for 10 minutes, the ceramic products were hard and had visually good shape retention. Samples 2-1 to 2-4 are shown in Figures 5 and 6. Samples 2-3 showed good water resistance which may be related to the higher densification of this sample, due to the elevated alumina levels from the clay and ATH.

The % shrinkage was measured by holding samples of approximately (38mm (L) x 13mm (W) x 2mm (D) rectangular sections, uncovered on a block of isolite and exposing the samples to 1000°C for 10 minutes. The % shrinkage was determined by calculating the % decrease in the length of the sample. Low shrinkage levels were observed (1.4 to 8.5%) which were consistent with % shrinkage observed in samples without the addition of magnesium oxide and silica (7.4%)

The crush resistance was measured at a rate of 5mm/min with the samples achieving a crush resistance of between 1 and 3.2 N compared to a crush resistance of 3 N for samples without the addition of magnesium oxide and silica.

**Table 3**

| Polymeric composition | 2-1 | 2-2 | 2-3 | 2-4 |
|---|---|---|---|---|
| Nordel IP4760 | 11.4 | 11.4 | 11.4 | 11.4 |
| Engage ENR7256 | - | - | - | - |
| Keltan2340A | 6.9 | 6.9 | 6.9 | 6.9 |
| Evatane 33-45 | 4.7 | 4.7 | 4.7 | 4.7 |
| Chinese APP | 13.4 | 13.4 | 13.4 | 13.4 |
| MV Talc | 20.0 | 20.0 | 20.0 | 20.0 |
| Translink 37 | 0.0 | 2.5 | 5.0 | 10.0 |
| Omyacarb 2T | 12.5 | 12.5 | 12.5 | 12.5 |
| ATH | 0.0 | 2.5 | 5.0 | 7.0 |
| Mg hydroxide | 12.0 | 12.0 | 12.0 | 12.0 |
| Nipsil VN3 Silica | 5.0 | 5.0 | 5.0 | 5.0 |
| P460 | 5.7 | 5.7 | 5.7 | 5.7 |
| Silane A172-50 | 1.0 | 1.0 | 1.0 | 1.0 |
| Wacker Silicone R401/80S | 2.5 | 2.5 | 2.5 | 2.5 |
| Vanox ZMTI | 1.0 | 1.0 | 1.0 | 1.0 |
| TMQ | 0.2 | 0.2 | 0.2 | 0.2 |
| Irganox MD1024 | 0.2 | 0.2 | 0.2 | 0.2 |
| TiO2 | - | - | - | - |
| Perkadox 14-40K | 2.6 | 2.6 | 2.6 | 2.6 |
| Zinc Stearate | 1.0 | 1.0 | 1.0 | 1.0 |
| Total | 100.0 | 100.0 | 99.0 | 100.0 |
| Inorganic % | 62.9 | 62.9 | 61.9 | 62.9 |
| Organic % | 37.1 | 37.1 | 37.1 | 37.1 |
| Silicate Minerals % | 20.0 | 22.5 | 25.0 | 30.0 |
| Tensile Mpa | 4.53 | 3.89 | 4.53 | 4.68 |
| Elongation % | 350 | 335 | 320 | 230 |
| Type of Ceramic, 10 min @ 1,000C | Hard | Hard | Hard | Hard |
| Effect of water | NR | NR | R | NR |
| % shrinkage | 1.4% | 7.0% | 8.5% | 5.1% |
| Crush resistance (N) | 3 | 1 | 2.8 | 3 |
| Moving Die Rheometer (MDR) | | | | |
| MDR, 193 °C | | | | |
| ML | 2.06 | 1.68 | 1.72 | 1.77 |
| MH | 21.83 | 22.55 | 22.71 | 23.71 |
| T50 | 0.42 | 0.43 | 0.41 | 0.41 |
| T90 | 1.47 | 1.5 | 1.36 | 1.36 |

### Example 3

A conductor made of bunched 7 wires of plain copper, 0.5 mm diameter (1.5 mm²) was insulated to a wall thickness of 1.0 mm with both a Ceramifiable composition as disclosed in earlier Australian patent application no 2004225453 and a composition of the present invention. The lengths of insulated conductor were then cut to suitable lengths and then assembled (laying up process) into four core cables. The assemblies were taped with foamed polypropylene tape, then sheathed with a commercially available halogen-free flame retardant sheathing composition. Such sheathing materials are readily available and are well known in the cable industry.

The two cables were then attached to galvanised steel cable trays, with two changes of direction in the fire zone and bending radius of 10 times cable overall diameter and the trays were then placed atop a furnace with dimensions of 1200 x 1200 x 1200 mm. This furnace is capable of providing the standard temperature-time curve used in the building industry (e.g AS1530.4). Circuit integrity measurement equipment was then attached to the cables, which were wired in the three core and earth configuration, with each of three conductors carrying a phase and the fourth connected to earth. Each circuit had a 4A fuse and a 60W bulb to indicate functioning of the cable.

The test was begun and the furnace temperature increased in line with the Standard temperature-time curve. Results were as follows:

**Table 4**

| Circuit | Description | Result | Comment |
|---|---|---|---|
| 1 | Prior art Core 1 | 120 min | Test stopped. OK |
| 2 | Prior art Core 2 | 95 min | Fail |
| 3 | Prior art Core 3 | 120min | Test stopped. OK |
| 4 | Present invention Core 1 | 120 min | Test stopped at specified time. All circuits OK |
| 5 | Present invention Core 2 | 120 min | |
| 6 | Present invention Core 3 | 120 min | |

This result shows that compositions to the present invention are better electrically and mechanically than those disclosed in the prior art.

Example 5 shows the effect of calcium borosilicate, bismuth oxide, mixtures of Calcium borosilicate and bismuth oxide and bismuth oxide without ATH on ceramic strength and shrinkage in compositions after firing

Seven compositions of containing calcium borosilicate, bismuth oxide, and calcium borosilicate/bismuth oxide and 5 samples of bismuth oxide without ATH were prepared to demonstrate the effectiveness of these compounds as a ceramifying additive. Compositions were prepared by weighing the ingredients and then mixing in a 50 cc Brabender roller mixer, preheated to 130 °C, for 10 minutes at 30 rpm. The contents of the mixer were removed, and then compression moulded to form sheets of thickness approx 1 mm. Samples of 38x13 mm were cut from the sheets with a rectangular cutting die. The samples were measured using a vernier calliper and then placed in a furnace at 1,000 °C for 30 min. After removal from the furnace and being allowed to cool to ambient, the samples were re-measured. The difference in length was expressed as a percentage, and then charted against the proportion of the respective compound in the composition.

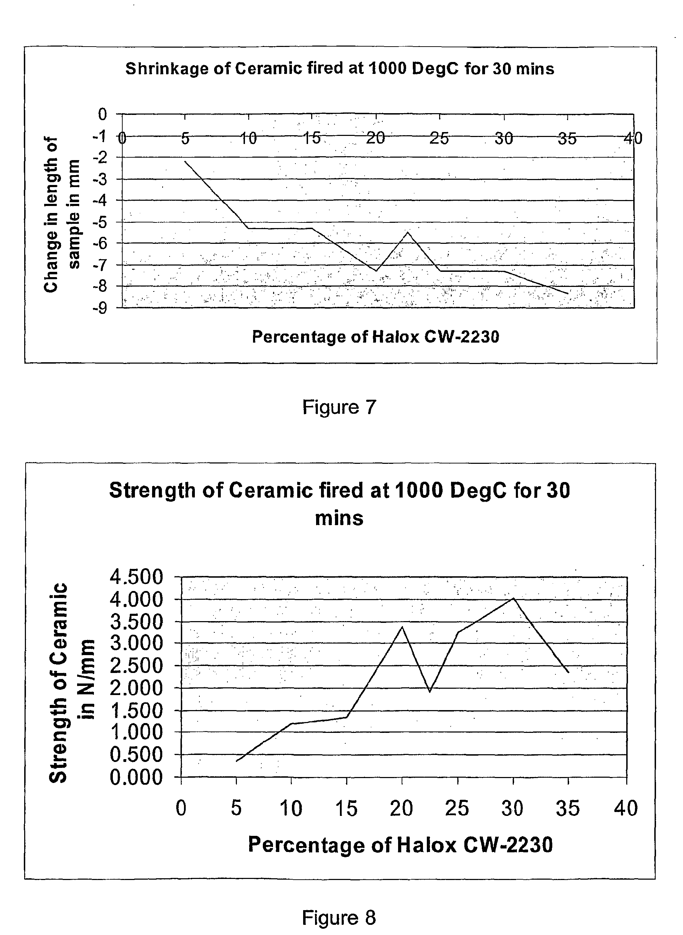

These results are shown in Tables 5.1 to 5.4 respectively and figures 7-10 illustrate the strength and shrinkage test results for the calcium borosilicate and bismuth oxide additions.

**Table 5.1**

| | Halox | | | | | | | |
|---|---|---|---|---|---|---|---|---|
| | **20307-1** | **20307-2** | **30506-2** | **20307-3** | **260307-2** | **20307-4** | **50407-1** | **50407-2** |
| Engage ENR7256 | 40.4 | 40.4 | 40.4 | 40.4 | 40.4 | 40.4 | 40.4 | 40.4 |
| Unilab Bi2O3 | 0 | 0 | 0 | 0 | 0 | 0 | 0 | 0 |
| Halox CW-2230 | 5 | 10 | 15 | 20 | 22.5 | 25 | 30 | 35 |
| Hydral 710 ATH | 0 | 0 | 0 | 0 | 0 | 0 | 0 | 0 |
| Almatis Al2O3 | 25.6 | 20.6 | 15.6 | 10.6 | 8.1 | 5.6 | 0 | 0 |
| Silica VN3 | 22 | 22 | 22 | 22 | 22 | 22 | 22.6 | 17.6 |
| Magnifin H10 Mg(OH)2 | 5 | 5 | 5 | 5 | 5 | 5 | 5 | 5 |
| Zinc Stearate | 1 | 1 | 1 | 1 | 1 | 1 | 1 | 1 |
| Silane A172-50 | 1 | 1 | 1 | 1 | 1 | 1 | 1 | 1 |
| | 100 | 100 | 100 | 100 | 100 | 100 | 100 | 100 |
| Fire for 30 min @ 1,000 | | | | | | | | |
| dL | -2.2 | -5.3 | -5.3 | -7.3 | -5.5 | -7.3 | -7.3 | -8.3 |
| dW | -0.3 | -0.8 | -0.8 | -2.1 | -1.6 | -2.2 | -2.3 | -2.4 |
| dH | 0.2 | 0 | -0.35 | -0.1 | 0 | -0.2 | -0.1 | -0.1 |
| | | | | | | | | |
| % Dimension change | -7.9 | -19.0 | -19.0 | -31.8 | -24.7 | -32.4 | -33.1 | -35.8 |
| | | | | | | | | |
| 3 pt bend strength N/mm | 0.357 | 1.20 | 1.33 | 3.38 | 1.9 | 3.24 | 4.01 | 2.35 |

### Interpretation of shrinkage results

Negative dimensions denote shrinkage, and it was found that the samples with increasing levels of calcium borosilicate showed a trend towards increasing shrinkage. This is also an indication that strength has been developed.

After the shrinkage measurements, the samples were subjected to fracture in a simple 3 point bending arrangement in an Instron 1122 mechanical testing machine. It is evident from the 3 point bend fracture results that substituting calcium borosilicate for the inert aluminium oxide results in increased strength of the ceramic. As seen from figure 7 and 8, the shrinkage after firing also increases with increasing levels with the addition of calcium borosilicate. As the further addition of calcium borosilicate beyond 20 wt% has diminishing strength benefits and shrinkage continues to increase the more compound is added, it is preferable to keep the levels of calcium borosilicate to below 15 wt%.

**Table 5.2**

| | Bi2O3 | | | | | | |
|---|---|---|---|---|---|---|---|
| | **1** | **2** | **3** | **4** | **5** | **6** | **7** |
| Engage ENR7256 | 40 | 40 | 40 | 40 | 40 | 40 | 40 |
| Unilab Bi2O3 | 1 | 2 | 3 | 4 | 5 | 7.5 | 10 |
| Halox CW-2230 | 0 | 0 | 0 | 0 | 0 | 0 | 0 |
| Hydral 710 ATH | 22 | 21 | 20 | 19 | 18 | 15.5 | 13 |
| Almatis Al2O3 | 5 | 5 | 5 | 5 | 5 | 5 | 5 |
| Silica VN3 | 20 | 20 | 20 | 20 | 20 | 20 | 20 |
| Magnifin H10 Mg(OH)2 | 10 | 10 | 10 | 10 | 10 | 10 | 10 |
| Zinc Stearate | 1 | 1 | 1 | 1 | 1 | 1 | 1 |
| Silane A172-50 | 1 | 1 | 1 | 1 | 1 | 1 | 1 |
| | | | | | | | |
| | 100 | 100 | 100 | 100 | 100 | 100 | 100 |
| Fire for 30 min @ 1,000 | | | | | | | |
| | | | | | | | |
| dL | -1.3 | -1.5 | -1.3 | -2.1 | -3.3 | -3.1 | -3.5 |
| dW | -0.1 | -0.3 | -0.8 | -0.8 | -1 | -0.9 | -0.8 |
| dH | 0.35 | 0.4 | 0.2 | 0.2 | 0.3 | 0.1 | 0.3 |
| | | | | | | | |
| % Dimension change | -4.1 | -6.1 | -9.2 | -11.2 | -15.5 | -14.3 | -14.6 |
| | | | | | | | |
| 3 pt bend strength N/mm | 0.190 | 0.200 | 0.208 | 0.303 | 0.435 | 0.375 | 0.458 |

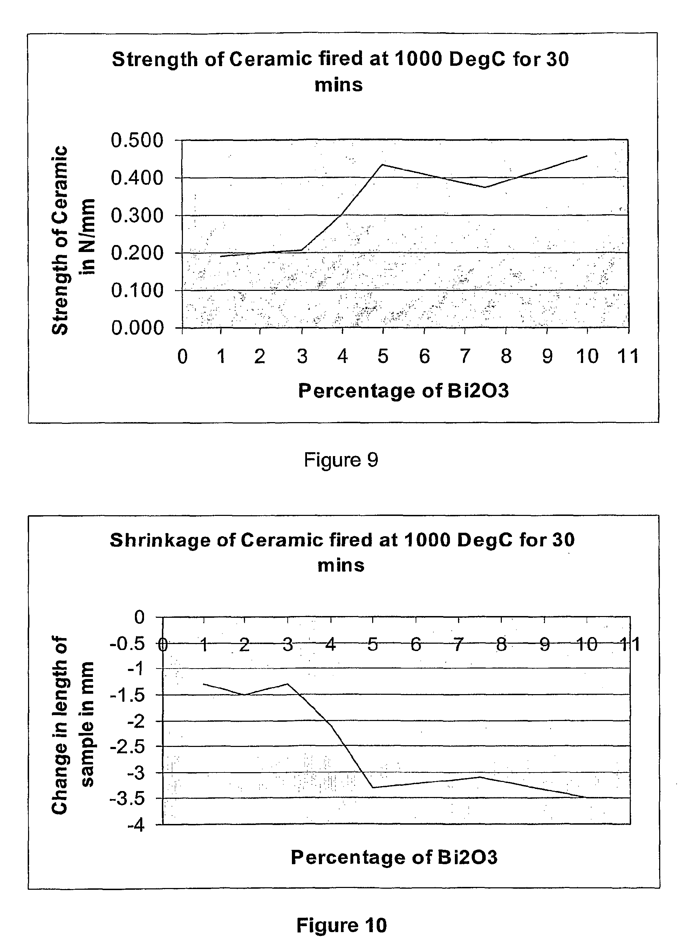

Similarly after the shrinkage measurements, the samples were subjected to fracture in a simple 3 point bending arrangement in an Instron 1122 mechanical testing machine. The results showed that substituting the bismuth oxide for the alumina resulted in increased strength in the ceramic. The results of the strength tests and the shrinkage tests are shown on figures 9 and 10. The graphs show that the addition of bismuth oxide has significant strength benefits up to 5 wt% additions with marginal improvement with further additions. The addition of bismuth oxide beyond 5 wt% showed a plateau in the shrinkage indicating that additions beyond 5 wt% provided no appreciable additional improvement in strength and shape retention.

**Table 5.3**

| | Halox/Bi2O3 Combinations | | | | | | |
|---|---|---|---|---|---|---|---|
| | **1** | **2** | **3** | **4** | **5** | **6** | **7** |
| Engage ENR7256 | 40 | 40 | 40 | 40 | 40 | 40 | 40 |
| Unilab Bi2O3 | 3 | 3 | 4 | 4 | 2 | 2 | 2 |
| Halox CW-2230 | 10 | 5 | 10 | 5 | 10 | 5 | 10 |
| Hydral 710 ATH | 10 | 10 | 10 | 10 | 10 | 10 | 0 |
| Almatis Al2O3 | 5 | 10 | 4 | 9 | 6 | 11 | 19 |
| Silica VN3 | 20 | 20 | 20 | 20 | 20 | 20 | 22 |
| Magnifin H10 Mg(OH)2 | 10 | 10 | 10 | 10 | 10 | 10 | 5 |
| Zinc Stearate | 1 | 1 | 1 | 1 | 1 | 1 | 1 |
| Silane A172-50 | 1 | 1 | 1 | 1 | 1 | 1 | 1 |
| | | | | | | | |
| | 100 | 100 | 100 | 100 | 100 | 100 | 100 |
| Fire for 30 min @ 1,000 | | | | | | | |
| dL | -2.8 | -1.3 | -2.5 | -1.8 | -2.3 | -0.1 | -4.8 |
| dW | -0.8 | -0.3 | -0.6 | -0.3 | -1.1 | -0.3 | -1.8 |
| dH | 0.1 | 0.1 | 0 | 0.1 | -0.1 | 0.1 | -0.1 |
| | | | | | | | |
| % Dimension change | -12.9 | -5.6 | -10.7 | -6.8 | -13.8 | -2.5 | -24.4 |
| | | | | | | | |
| 3 pt bend strength N/mm | 0.525 | 0.149 | 1.05 | 0.556 | 1.316 | 0.125 | 3.00 |

Similarly after the shrinkage measurements, the samples were subjected to fracture in a simple 3 point bending arrangement in an Instron 1122 mechanical testing machine. The results suggest that small additions of bismuth oxide and calcium borosilicate ie less than 3 wt% bismuth oxide and less than 5 wt% calcium borosilicate can produce reasonable strength ceramics after firing with exhibit low shrinkage.

**Table 5.4**

| | Bi2O3 limits (No ATH) | | | | |
|---|---|---|---|---|---|
| | **1** | **2** | **3** | **4** | **5** |
| Engage ENR7256 | 40.4 | 40.4 | 40.4 | 40.4 | 40.4 |
| Unilab Bi2O3 | 5 | 10 | 15 | 20 | 25 |
| Halox CW-2230 | | | | | |
| Hydral 710 ATH | | | | | |
| Almatis Al2O3 | 25.6 | 20.6 | 15.6 | 10.6 | 5.6 |
| Silica VN3 | 22 | 22 | 22 | 22 | 22 |
| Magnifin H10 Mg(OH)2 | 5 | 5 | 5 | 5 | 5 |
| Zinc Stearate | 1 | 1 | 1 | 1 | 1 |
| Silane A172-50 | 1 | 1 | 1 | 1 | 1 |
| | | | | | |
| | 100 | 100 | 100 | 100 | 100 |
| Fire for 30 min @ 1,000 | | | | | |
| dL | -2.8 | Not tested | Not tested | Not tested | -5.3 |
| dW | -1.1 | | | | -3.6 |
| dH | -0.1 | | | | -0.3 |
| | | | | | |
| % Dimension change | -15.0 | | | | -37.2 |
| | | | | | |
| 3 pt bend strength N/mm | 0.278 | | | | 2.63 |

Similarly shrinkage measurements on two of the samples suggested that the calcium borosilicate and ATH contributed to the dimensional stability of the sample. The samples were subjected to fracture in a simple 3 point bending arrangement in an Instron 1122 mechanical testing machine which showed that increased strength resulted from

In the above compositions, Polyolefin elastomer" includes the commercially available products of Exxon corp.and Dow corp, namely "Exxact" and "Engage" respectively.

"Halox CW2230" is a product of the Hammond Group Inc of 1326 Summer Street, Hammond, IN 46320, USA

"Fine silica" is a finely divided grade of silica, for example the range of "Ultrasil" products from Degussa corp.

"Fine alumina" refers to fine grades of alumina powder as used in the ceramic industry.

"Silane A172/50" is a dispersion in wax of vinyl trimethoxy silane, available from many suppliers of silanes.

"Zinc stearate" is a readily available commercial lubricant powder, commonly used in the polymer processing industries.

### Example 6

The objective of this example is to assess the performance of ceramifiable cable compositions containing a calcium borosilicate compound compared to conventional ceramifiable formula containing ammonium polyphosphate. Two separate 1 m lengths of cable were laid up in the laboratory.

Cable A is a 2-core 1.5 mm² copper wire with a 1.0 mm wall insulated with formula 71105 (Figure 2) laid up in a laboratory with foamed PP tape over layup for 500mm, taped with aluminium polyester laminate tape (aluminium side out), fitted with 7/0.5mm PACW drain wire, taped with plain polyester tape, for other 500mm, sheathed in a laboratory with FR120 white ~1.0 mm wall.

Cable B is a 2-core 1.5 mm² copper wire with a 1.0 mm wall insulated with formula 220506 (Figure 2), taped with aluminium polyester laminate tape (aluminium side out), fitted with 7/0.5mm PACW drain wire, taped with plain polyester tape, for other 500mm, sheathed in a laboratory with FR120 white ~1.0 mm wall

Both cables were cut into ~100mm lengths and labelled for testing purposes.

One sample of each type of cable (plain) was put in at the same time at 700°C for 15 mins and then separately to observe the interaction between the two cables in the furnace. A tape screened sample of each cable was then put in together at 700°C for 15 mins to observe the effect of the tape screen at high temperature.

Finally, using the unscreened cable, both cables were put in the furnace for 15 mins at 800°C, 900°C and 1,000°C, and then for 30 mins at 1,000°C respectively, and then the screened versions were put in at 1,000°C for 15 mins.

### Results

Upon inspection, the cables had very similar cracking which indicates that there is minimal interaction between the cables in the furnace. The tape screen appeared to protect the material as can be seen from the lack of severe cracking in both samples.

When the temperature was increased to 800°C the 220506 formula started to crack more than the 71105 formula. The 71105 formula showed mild cracking, whereas the 220506 formula started to peel away from the wire.

At 900°C and 1000°C for 15 minutes the 220506 formula showed severe cracking. The 71105 formula showed only minor cracking (Figures 7 and 8).

At 1,000°C for 30 min, the 220506 formula is still much the same. The 71105 formula is starting to show signs of cracking along the outside of the bends in the cable.

Again, the tape screen protected the cable but the 220506 formula had one crack halfway along each core..

The 220506 cable had greater ceramic strength but had more cracks as a result. It was very hard to crush the ceramic between the fingers and also hard to break it. The 71105 cable had significantly less ceramic strength but much better shape retention. This confirms the expected trade-off between strength due to densification and subsequent cracking.

As a 2-core cable the 71105 formula produced much less cracking than the 220506 formula in all tests but also had reduced strength. Based on this result, it appears that the addition of the screen to the cable provides some additional resistance to cracking at temperatures between 700°C and 1000°C.

Following the comparison of the 71105 and 220506-2 formulas(see Table 6 for formulas), it was seen that the 71105 formula produced less cracking than the 220506-2 formula on 7/0.5 mm wire. Also, it was deduced from visual inspection that the screened versions of each cable produced less cracking. The objective of this example is to investigate the resistance of the two cables (71105 and 220506-2), in addition to formula 30506-2, 50706, 110706 and 130706-2 under conditions similar to the AS3013 fire test. The results indicated the ability of the formula to safety carry current in conditions similar to the AS3013 fire test.

The 50706, 110706 and 130706-2 formulae are included to investigate the effect of systematically substituting the inorganic components talc, clay and calcium carbonate on the resistance at high temperatures.

Four separate 1 m lengths of cable were laid up in the laboratory.

Cable 1 is a 2-core 1.5 mm² copper wire with a 1.0 mm wall insulated with formula 71105, laid up in a laboratory with foamed PP tape over layup, sheathed in a laboratory with FR120 white ~1.0 mm wall.

Cable 2 is a 2-core 1.5 mm² copper wire with a 1.0 mm wall insulated with formula 71105, laid up in a laboratory, taped with aluminium polyester laminate tape (aluminium side out), fitted with 7/0.5mm PACW drain wire, taped with plain polyester tape, sheathed in a laboratory with FR120 white ~1.0 mm wall

Cable 3 is a 2-core 1.5 mm² copper wire with a 1.0 mm wall insulated with formula 220506-2, laid up in a laboratory with foamed PP tape over layup, sheathed in a laboratory with FR120 white ~1.0 mm wall.

Cable 4 is a 2-core 1.5 mm² copper wire with a 1.0 mm wall insulated with formula 220506-2, laid up in a laboratory, taped with aluminium polyester laminate tape (aluminium side out), fitted with 7/0.5mm PACW drain wire, taped with plain polyester tape, sheathed in a laboratory with FR120 white ~1.0mm wall.

All four cables had 100mm of sheathing removed at one end and 30mm of insulation removed from each core.

Cables 1 & 2 were placed in a cable tray with insulation laid between the cables and the tray. The purpose of insulating the tray was to remove the possibility of the wire shorting out to the tray and thereby only allowing the cable to fail between the cores and not to the tray, which in turn makes measuring the resistance much easier. The tray was placed in the furnace with the exposed ends of the cables protruding out the side for measurement purposes.

The furnace was then switched on with the temperature being controlled in a similar manner to the AS3013 fire test. The actual time-temperature curve is in accordance to AS1530.4. Using a MegOhm meter the resistance between the two cores of each cable was measured periodically. The test was stopped when the resistance dropped below a measurable level.

The same test was then performed on cables 3 & 4.

As a comparison, a fifth cable was tested which consisted of the 30506-2 formula which passed the AS3013 fire test at WFRA.

Cable 5 is a 2-core 1.5 mm² copper wire with a 1.0 mm wall insulated with 30506-2, made in a laboratory, laid up in a laboratory with foamed PP tape over lay up, sheathed in a laboratory with FR120 red ~1.0 mm wall.

On considering the results of the tests of cables 1-5, three new formulae were made up (See Table 6). Each formula was the same as the 220506-2 formula except 50706-1 had the MV Talc removed, 50706-2 had the Translink 37 removed and 50706-3 had the Omyacarb 2T removed. Each was replaced with Almatis CL370C Al₂O₃.

The systematic removal of these components was performed investigate the effect of each to the outcome. The Al₂O₃ was considered to be an inert replacement for the other inorganics. The basis for this action was to assess the purported negative effects of each of talc, clay and CaCO₃ as these components degraded at high temperature.

In particular, it had been reported that there is a negative effect of CO₂ release from CaCO₃ at around 700 °C, water release form talc around 900 °C. Further, it had been reported that Na and K present in the Translink 37 clay, contributed to an increase in conductivity of the ceramifiable composition at elevated temperatures.

Systematically replacing each of these components with inert alumina while monitoring other properties of interest enables the ceramifiable calcium borosilicate formula to be optimised.

Three more cables were laid up and tested using these new formulae.

Cable 6 is a 2-core 1.5 mm² copper wire with a 1.0 mm wall insulated with formula 50706-1, made in a laboratory, laid up in a laboratory with foamed PP tape over layup, sheathed in a laboratory with FR120 red ~1.0 mm wall.

Cable 7 is a 2-core 1.5 mm² copper wire with a 1.0 mm wall insulated with formula 50706-2, made in a laboratory, laid up in a laboratory with foamed PP tape over layup, sheathed in a laboratory with FR120 red ~1.0 mm wall.

Cable 8 is a 2-core 1.5 mm² copper wire with a 1.0 mm wall insulated with formula 50706-3, made in a laboratory, laid up in a laboratory with foamed PP tape over layup, sheathed in a laboratory with FR120 red ~1.0 mm wall.

As a further investigation, a ninth cable was made up and tested with both the Translink 37 and the Omyacarb 2T removed to examine their cumulative effects. It was tested alongside a sample of the 50706-1 cable and a mica-taped 3-core 1.5 mm² cable as a reference. A tenth cable with half of the MV Talc present in the 220506-2 formula replaced by Ultrasil VN3 and the other half omitted was also made up and tested.

Cable 9 is a 2-core 1.5 mm² copper wire with a 1.0 mm wall insulated with formula 110706, made in a laboratory, laid up in a laboratory with foamed PP tape over layup, sheathed in a laboratory with FR120 white ~1.0 mm wall.

Cable 10 is a 2-core 1.5 mm² copper wire with a 1.0 mm wall insulated with formula 130706-2, made in a laboratory, laid up in a laboratory with foamed PP tape over layup, sheathed in a laboratory with FR120 white ~1.0 mm wall.

### Results

The results are shown in Table 6.

**Table 6**

| **Cable #** | 1 & 2 | 3 & 4 | 5 | 6 | 7 | 8 | 9 | 10 |
|---|---|---|---|---|---|---|---|---|
| **Formula #** | **71105** | **220506-2** | **30506-2** | **50706-1** | **50706-2** | **50706-3** | **110706** | **130706-2** |
| Nordel IP4760 | 11.4 | 11.5 | 0 | 11.5 | 11.5 | 11.5 | 11.5 | 11.5 |
| Keltan 2340A | 6.9 | 7 | 0 | 7 | 7 | 7 | 7 | 7 |
| Evatane 33-45 | 4.7 | 4.7 | 0 | 4.7 | 4.7 | 4.7 | 4.7 | 4.7 |
| Engage ENR7256 | 0 | 0 | 40.4 | 0 | 0 | 0 | 0 | 0 |
| Ultrasil VN3 | 0 | 0 | 22 | 0 | 0 | 0 | 0 | 12 |
| Halox CW-2230 | 0 | 13.5 | 15 | 13.5 | 13.5 | 13.5 | 13.5 | 13.5 |
| Chinese APP | 13.4 | 0 | 0 | 0 | 0 | 0 | 0 | 0 |
| Almatis CL370C A12O3 | 0 | 0 | 15.6 | 24 | 12.5 | 12.5 | 25 | 37 |
| MV Talc | 24.8 | 24 | 0 | 0 | 24 | 24 | 24 | 0 |
| Translink 37 Clay | 12.4 | 12.5 | 0 | 12.5 | 0 | 12.5 | 0 | 0 |
| Omyacarb 2T CaCO3 | 12.4 | 12.5 | 0 | 12.5 | 12.5 | 0 | 0 | 0 |
| P460 Oil | 5.7 | 5.8 | 0 | 5.8 | 5.8 | 5.8 | 5.8 | 5.8 |
| Zinc Stearate | 1 | 1 | 1 | 1 | 1 | 1 | 1 | 1 |
| Silane A172-50 | 1 | 1 | 1 | 1 | 1 | 1 | 1 | 1 |
| MgOH₂ | 0 | 0 | 5 | 0 | 0 | 0 | 0 | 0 |
| Wacker Silicone R401/80S | 2.5 | 2.5 | 0 | 2.5 | 2.5 | 2.5 | 2.5 | 2.5 |
| Vanox ZMTI | 1 | 1 | 0 | 1 | 1 | 1 | 1 | 1 |
| TMQ | 0.2 | 0.2 | 0 | 0.2 | 0.2 | 0.2 | 0.2 | 0.2 |
| Irganox MD1024 | 0.2 | 0.2 | 0 | 0.2 | 0.2 | 0.2 | 0.2 | 0.2 |
| Perkadox 14-40K | 2.6 | 2.6 | 0 | 2.6 | 2.6 | 2.6 | 2.6 | 2.6 |
| Total: | 100.0 | 100 | 100 | 100 | 100 | 100 | 100 | 100 |

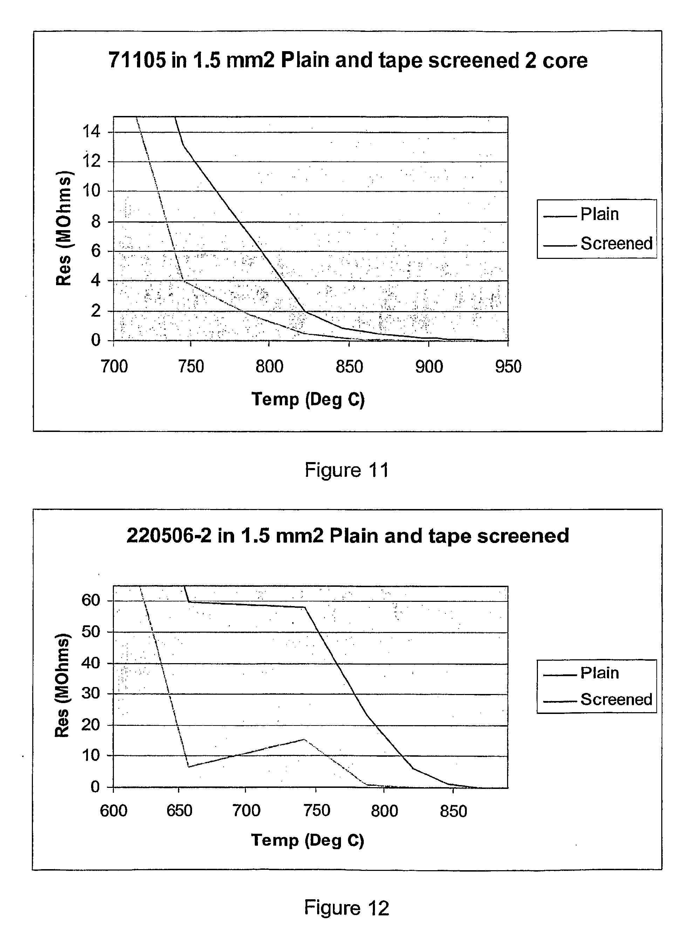

It can be seen from Figures 11 and 12 that, in both compositions (71105 and 220506) the resistance drops more quickly in the screened sample. This is interesting considering that from the Example 2 it was shown that the screened samples demonstrated less cracking than the plain samples

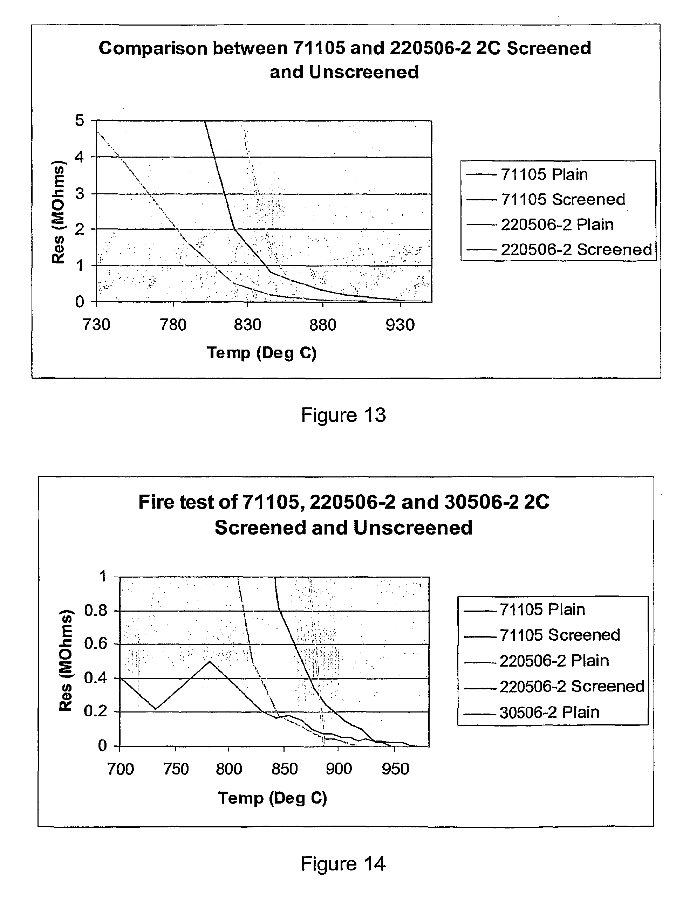

Figure 13 shows a comparison between the resistance of the 71105 formula and the 220506-2 formula. While the resistance of the 71105 formula drops quicker at lower temperatures (4MΩ at 745 and 820 compared to 4MΩ at 780 and 835), the rate at which it drops slows down much more than the 220506-2 which can be seen by the first crossover point of the two graphs.

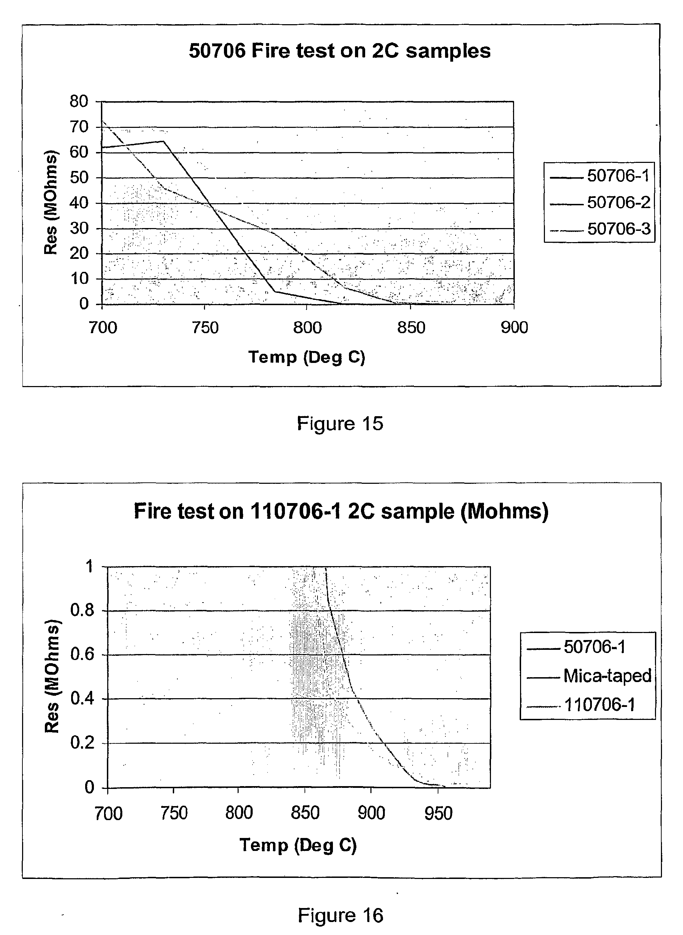

Figure 14 illustrates the resistance of the 30506-2 sample in comparison with cables 1 to 4. The resistance of this cable dropped at a much lower temperature than the other cables but slowed down very quickly to the point where it actually surpassed the other four cables. By approximately 940°C it had the highest resistance. Figure 15 illustrates the resistivity of the three 50706 formulae: 50706-1 with the talc removed, 50706-2 with the Translink 37 clay removed and 50706-3 with the Omyacarb 2T CaCO₃ removed. Formula 50706-3 showed the most promising results. Cable 6's insulation appeared to flow from one core to another. Cable 7 and 8 were very similar with cable 8 showing less cracking.

To investigate the effect of removing both the clay (Translink 37) and calcium carbonate (Omyacarb 2T) in the 110706 formula was trialled. Figure 16 shows that the 110706 formula endured a much higher temperature than the 50706-1 formula and actually showed a higher resistance than the mica-taped cable above approximately 925°C.. Again the 50706-1 insulation flowed between cores. The mica-taped sample had no insulation but was in reasonable condition. The 110706 sample had formed a ceramic with very little cracking.

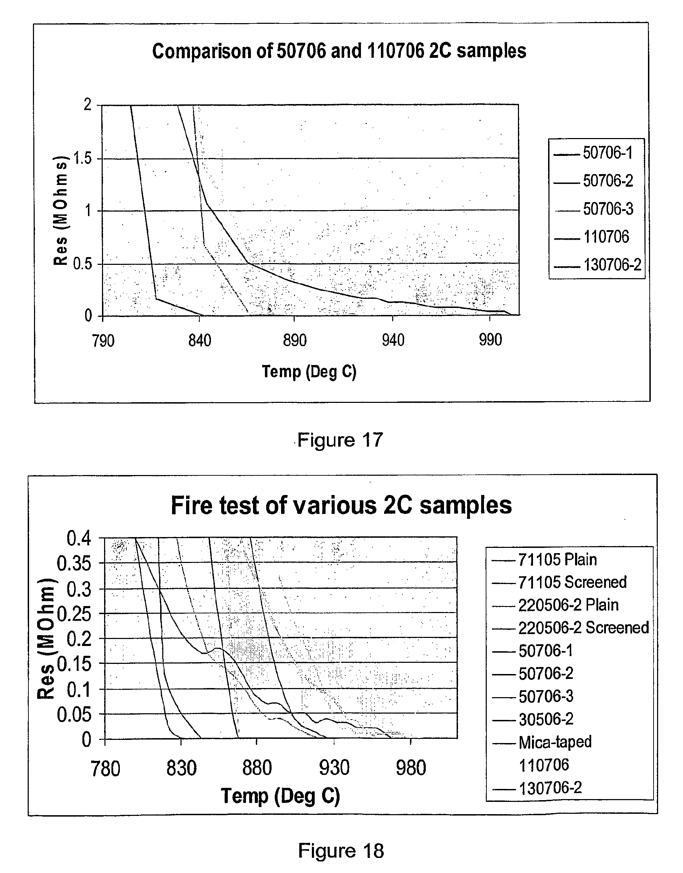

From figure 17, it can be seen that the 110706 cable was an improvement on the 50706 formulae with a higher resistance at temperatures above 900°C. The 130706-2 formula was a further improvement on the 110706 formula, lasting to just below 1000°C.

Figure 18 shows an overall comparison of all tested samples. The 30506-2, 110706 and the 130706-2 demonstrated the most desirable qualities in terms of resistance. It is noted that the tape-screened samples decreased in resistance at a lower temperature than the plain samples. The tape-screened samples again produced less cracking than the plain samples.

The 71105 formula held its resistance at higher temperatures in comparison to the 220506-2 formula and also produced less cracking however, as a trade-off, had a reduced strength. At temperatures nearing 1000°C, the 71105 seemed to completely lose its shape and moulded with the copper

Of the 50706 formulae, the 50706-3 formula (no CaCO₃) held its resistance the longest and was also an improvement on the 220506-2 formula but was not as good as the 71105 formula in terms of resistance. The 50706-3 formula did however have a much higher strength while producing a similar amount of cracking.

The 30506-2 formula (no clay) held it's resistance up to near 950°C, however the ceramic was not well formed at the end of the fire test. This may be due to a higher than indicated temperature in the furnace that possibly melted the copper.

The 130706-2 formula produced the most desirable result, holding its resistance the longest (up to 990°C) and producing a strong ceramic with only mild cracking.

In terms of 1.5 mm² 2 core cables the calcium borosilicate formula containing to talc, clay or calcium carbonate (130706-2) displayed the highest resistance at all measured temperatures above 910°C and also produced a low amount of cracking, similar to the 71105 formula. Although the tape-screened samples produced better results in terms of cracking, their resistance generally dropped at lower temperatures indicating that a screened cable is more likely to fail in practice at temperatures between 700°C and 1000°C.

In the design of such cables, the compositions can be used as an extruded insulation directly over conductors and/or used as an extruded sheathing layer over an insulation layer or layers. Alternatively, they can be used as an interstice filler in multi-core cables, as individual extruded fillers added to an assembly to round off the assembly, as an inner layer prior to the application of wire or tape armour.

In practice the composition will typically be extruded onto the surface of a conductor. This extrusion may be carried out in a conventional manner using conventional equipment. The thickness of the layer of insulation will depend upon the requirements of the particular standard for the size of conductor and operating voltage. Typically the insulation will have a thickness from 0.6 to 3 mm. For example, for a 35 mm² conductor rated at 0.6/1 kV to Australian Standards would require an insulation thickness of approximately 1.2 mm. As noted, compositions in accordance with the invention may exhibit excellent thermal and electrical insulating properties at elevated temperature. When used such compositions enable a cable of elegantly simple design to be manufactured since there is then no need to include a distinct layer to confer electrical insulating properties.

## Claims

1. A fire resistant polymeric composition which forms a target mineral on firing of the polymeric composition including:
20 - 60 wt% of an organic polymer;
2 - 30 wt% of a magnesium compound that oxidises to form MgO; and
5 to 30 wt% silica;
the silica forming an acidic oxide that reacts with the MgO to form the target mineral.

2. The composition of claim 1, wherein the organic polymer content is in the range of 30 - 45 wt%.

3. The composition of claims 1 or 2, wherein the magnesium compound is in the range of 2 - 20 wt%.

4. The composition of claims 1, 2 or 3 wherein the silica content is in the range of 5- 20 wt%

5. The composition of claim 1 wherein the inorganic components in the polymeric composition are not more than 65wt%.

6. The composition of claim 1 further including alumina in an amount of up to 30 wt%.

7. The composition of claim 1 further including an alkaline earth metal borosilicate compound, the alkaline earth metal borosilicate compound forming a ceramic composition at an elevated temperature.

8. The composition of claim 7 wherein the alkaline earth metal borosilicate compound is present in an amount of up to 15 weight % of the total composition, and preferably not less than 5 wt%.

9. The composition of claim 7 or 8 wherein the alkaline earth metal component of the alkaline earth metal borosilicate compound is selected from a group consisting of calcium, magnesium, strontium, barium, lead and zinc, and preferably, the alkaline earth metal borosilicate compound is calcium borosilicate.

10. The composition of claim 9 wherein the calcium borosilicate includes calcium silicate and/or calcium borate or their precursors.

11. The composition of claim 7 wherein the composition forms a self-supporting ceramic on exposure to an elevated temperature such as those experienced under fire conditions.

12. The composition of claim 7 wherein the boron content of the ceramic composition is at least 1 weight %, preferably at least 3 weight %, and more preferably at least 5 weight %.

13. The composition of claim 12 wherein the boron content of the ceramic composition is up to 12.5 weight %.

14. The composition of claim 7 wherein the borosilicate ceramic formed on exposure to an elevated temperature experienced under fire conditions has a flexural strength of at least 0.3MPa, preferably at least 1 MPa, and more preferably at least 2 MPa.

15. The composition of claim 7 further including mineral filler materials which are substantially free of monovalent alkaline metals.

16. The composition of claim 1 further comprising oxides of bismuth.

17. The composition of claim 16 wherein the bismuth oxides are present in amounts less than 5wt%, preferably less than 4 wt%.

18. The composition of claim 1 wherein the polymer composition further includes at least one other polymer which is not an organic polymer.

19. The composition of claim 18 wherein the polymer composition includes a silicone polymer in combination with the organic polymer.

20. The composition of claim 18 wherein the organic polymer is present in the polymer composition in an amount of at least 50% by weight.

21. The composition of claim 19 wherein the weight ratio of organic polymer to silicone polymer is from 5: 1 to 2: 1.

22. The composition of claim 1 wherein the amount of the polymer base composition does not exceed about 60% by weight of the overall composition.

23. The composition of claim 1, wherein the target mineral is forsterite.

24. An electrical cable comprising of a composition in accordance with claims 1, 7 or 15 applied directly onto a conductor.

## Patentansprüche

1. Feuerbeständige Polymerzusammensetzung, die bei einem Feuerbehandeln der Polymerzusammensetzung ein Zielmineral bildet, enthaltend:
20 bis 60 Gew.-% eines organischen Polymers;
2 bis 30 Gew.-% einer Magnesiumverbindung, die oxidiert, um MgO zu bilden; und
5 bis 30 Gew.-% Siliciumdioxid;
wobei das Siliciumdioxid ein saures Oxid bildet, das mit dem MgO reagiert, um das Zielmineral zu bilden.

2. Zusammensetzung nach Anspruch 1, wobei der Gehalt an organischem Polymer im Bereich von 30 bis 45 Gew.-% liegt.

3. Zusammensetzung nach Anspruch 1 oder 2, wobei die Magnesiumverbindung im Bereich von 2 bis 20 Gew.-% liegt.

4. Zusammensetzung nach Anspruch 1, 2 oder 3, wobei der Siliciumdioxidgehalt im Bereich von 5 bis 20 Gew.-% liegt.

5. Zusammensetzung nach Anspruch 1, wobei die anorganischen Komponenten in der Polymerzusammensetzung nicht mehr als 65 Gew.-% betragen.

6. Zusammensetzung nach Anspruch 1, die darüber hinaus Aluminiumoxid in einer Menge von bis zu 30 Gew.-% umfasst.

7. Zusammensetzung nach Anspruch 1, die darüber hinaus eine Erdalkalimetallborosilikatverbindung enthält, wobei die Erdalkalimetallborosilikatverbindung bei erhöhter Temperatur eine Keramikzusammensetzung bildet.

8. Zusammensetzung nach Anspruch 7, wobei die Erdalkalimetallborosilikatverbindung in einer Menge von bis zu 15 Gew.-% der gesamten Zusammensetzung und vorzugsweise nicht weniger als 5 Gew.-% vorhanden ist.

9. Zusammensetzung nach Anspruch 7 oder 8, wobei die Erdalkalimetallkomponente der Erdalkalimetallborosilikatverbindung aus einer Gruppe ausgewählt ist, bestehend aus Calcium, Magnesium, Strontium, Barium, Blei und Zink, und die Erdalkalimetallborosilikatverbindung vorzugsweise Calciumborosilikat ist.

10. Zusammensetzung nach Anspruch 9, wobei das Calciumborosilikat Calciumsilikat und/oder Calciumborat oder Vorläufer davon beinhaltet.

11. Zusammensetzung nach Anspruch 7, wobei die Zusammensetzung bei Aussetzung gegenüber erhöhter Temperatur, z. B. jenen, die unter Brandbedingungen auftreten, eine selbsttragende Keramik bildet.

12. Zusammensetzung nach Anspruch 7, wobei der Borgehalt der Keramikzusammensetzung zumindest 1 Gew.-%, vorzugsweise zumindest 3 Gew.-% und am meisten bevorzugt zumindest 5 Gew.-% beträgt.

13. Zusammensetzung nach Anspruch 12, wobei der Borgehalt der Keramikzusammensetzung bis zu 12,5 Gew.-% beträgt.

14. Zusammensetzung nach Anspruch 7, wobei die Borosilikatkeramik bei Aussetzung gegenüber erhöhter Temperatur, die bei Brandbedingungen auftritt, eine Biegefestigkeit von zumindest 0,3 MPa, vorzugsweise zumindest 1 MPa und mehr bevorzugt zumindest 2 MPa aufweist.

15. Zusammensetzung nach Anspruch 7, die darüber hinaus Mineralfüllmaterialien enthält, die im Wesentlichen frei von einwertigen Alkalimetallen sind.

16. Zusammensetzung nach Anspruch 1, die darüber hinaus Bismutoxide umfasst.

17. Zusammensetzung nach Anspruch 16, wobei die Bismutoxide in Mengen von weniger als 5 Gew.-%, vorzugsweise weniger als 4 Gew.-%, vorhanden sind.

18. Zusammensetzung nach Anspruch 1, wobei die Polymerzusammensetzung darüber hinaus zumindest ein weiteres Polymer enthält, das kein organisches Polymer ist.

19. Zusammensetzung nach Anspruch 18, wobei die Polymerzusammensetzung ein Silikonpolymer in Kombination mit dem organischen Polymer enthält.

20. Zusammensetzung nach Anspruch 18, wobei das organische Polymer in der Polymerzusammensetzung in einer Menge von zumindest 50 Gew.-% vorhanden ist.

21. Zusammensetzung nach Anspruch 19, wobei das Gewichtsverhältnis von organischem Polymer zu Silikonpolymer 5:1 bis 2:1 beträgt.

22. Zusammensetzung nach Anspruch 1, wobei die Menge der Polymerbasiszusammensetzung ungefähr 60 Gew.-% des Gewichts der gesamten Zusammensetzung nicht übersteigt.

23. Zusammensetzung nach Anspruch 1, wobei das Zielmineral Forsterit ist.

24. Elektrisches Kabel, das eine Zusammensetzung nach Anspruch 1, 7 oder 15 umfasst, das direkt auf einem Leiter angewandt wird.

## Revendications

1. Composition polymère résistant au feu qui forme un minéral cible lors de la combustion de la composition polymère, contenant :
20 à 60 % en poids d'un polymère organique ;
2 à 30 % en poids d'un composé du magnésium qui s'oxyde pour former MgO ; et
5 à 30 % en poids de silice ;
la silice formant un oxyde acide qui réagit avec le MgO pour former le minéral cible.

2. Composition selon la revendication 1, dans laquelle la teneur en polymère organique est située dans la plage allant de 30 à 45 % en poids.

3. Composition selon la revendication 1 ou 2, dans laquelle la teneur en composé du magnésium est située dans la plage allant de 2 à 20 % en poids.

4. Composition selon la revendication 1, 2 ou 3, dans laquelle la teneur en silice est située dans la plage allant de 5 à 20 % en poids.

5. Composition selon la revendication 1, dans laquelle la teneur en les composés inorganiques de la composition polymère ne dépasse pas 65 % en poids.

6. Composition selon la revendication 1, contenant de plus de l'alumine en une quantité allant jusqu'à 30 % en poids.

7. Composition selon la revendication 1, contenant en outre un composé borosilicate de métal alcalino-terreux, le composé borosilicate de métal alcalino-terreux formant une composition céramique à une température élevée.

8. Composition selon la revendication 7, dans laquelle le composé borosilicate de métal alcalino-terreux est présent en une quantité allant jusqu'à 15 % en poids de la composition totale, et de préférence d'au moins 5 % en poids.

9. Composition selon la revendication 7 ou 8, dans laquelle le composant métal alcalino-terreux du composé borosilicate de métal alcalino-terreux est choisi dans l'ensemble constitué par le calcium, le magnésium, le strontium, le baryum, le plomb et le zinc, et de préférence le composé borosilicate de métal alcalino-terreux est le borosilicate de calcium.

10. Composition selon la revendication 9, dans laquelle le borosilicate de calcium contient du silicate de calcium et/ou du borate de calcium ou leurs précurseurs.

11. Composition selon la revendication 7, laquelle composition forme une céramique autosupportée suite à une exposition à une température élevée telle que celles rencontrées dans des conditions d'incendie.

12. Composition selon la revendication 7, dans laquelle la teneur en bore de la composition céramique est d'au moins 1 % en poids, de préférence d'au moins 3 % en poids, et mieux encore d'au moins 5 % en poids.

13. Composition selon la revendication 12, dans laquelle la teneur en bore de la composition céramique va jusqu'à 12,5 % en poids.

14. Composition selon la revendication 7, dans laquelle la céramique de borosilicate formée suite à une exposition à une température élevée rencontrée dans des conditions d'incendie a une résistance à la flexion d'au moins 0,3 MPa, de préférence d'au moins 1 MPa, et mieux encore d'au moins 2 MPa.

15. Composition selon la revendication 7, contenant en outre des matériaux de charge minéraux qui sont pratiquement exempts de métaux alcalins monovalents.

16. Composition selon la revendication 1, comprenant en outre des oxydes de bismuth.

17. Composition selon la revendication 16, dans laquelle les oxydes de bismuth sont présents en des quantités inférieures à 5 % en poids, de préférence inférieures à 4 % en poids.

18. Composition selon la revendication 1, laquelle composition polymère contient en outre au moins un autre polymère qui n'est pas un polymère organique.

19. Composition selon la revendication 18, laquelle composition polymère contient un polymère siliconé en combinaison avec le polymère organique.

20. Composition selon la revendication 18, dans laquelle le polymère organique est présent dans la composition polymère en une quantité d'au moins 50 % en poids.

21. Composition selon la revendication 19, dans laquelle le rapport en poids du polymère organique au polymère siliconé est de 5/1 à 2/1.

22. Composition selon la revendication 1, dans laquelle la quantité de la composition de base polymère ne dépasse pas environ 60 % en poids de la composition globale.

23. Composition selon la revendication 1, dans laquelle le minéral cible est la forstérite.

24. Câble électrique comprenant une composition selon la revendication 1, 7 ou 15 appliquée directement sur un conducteur.
